# EUROPÄISCHE PATENTSCHRIFT

(11) **EP 3 345 745 B1**
(45) Veröffentlichungstag und Bekanntmachung des Hinweises auf die Patenterteilung: **15.01.2020**
(21) Anmeldenummer: 17204830.8
(22) Anmeldetag: 01.12.2017
(51) Int. Cl.: B29C 64/214, B29C 64/188, B33Y 10/00, B33Y 30/00, B29C 64/153, B29C 64/336

(54) **FERTIGUNGSANLAGE UND VERFAHREN ZUR HERSTELLUNG EINES BAUTEILS**
PRODUCTION SYSTEM AND METHOD FOR PRODUCING A COMPONENT
INSTALLATION DE FABRICATION ET PROCÉDÉ DE FABRICATION D'UN COMPOSANT

(30) Priorität: 02.12.2016 DE 102016123344
(43) Veröffentlichungstag der Anmeldung: 11.07.2018
(73) Patentinhaber: Deutsches Zentrum für Luft- und Raumfahrt e.V., 51147 Köln (DE)
(72) Erfinder: Pohl, Martin, Dr., 38108 Braunschweig (DE)
(74) Vertreter: Gramm, Lins & Partner Patent- und Rechtsanwälte PartGmbB

(56) Entgegenhaltungen:
- EP-B1- 1 198 341
- DE-A1-102007 033 715
- DE-A1-102007 040 755

## Beschreibung

Die Erfindung betrifft eine Fertigungsanlage zur Herstellung eines Bauteils mittels eines additiven Fertigungsverfahrens, bei dem ein formloser Werkstoff schichtweise aufgebracht und basierend auf einem digitalen Datenmodell selektiv ausgehärtet wird. Die Erfindung betrifft ebenso ein Verfahren zur Herstellung eines solchen Bauteils mittels eines solchen additiven Fertigungsverfahrens.

Druckschrift EP1198341 B1 zeigt eine Vorrichtung und ein Verfahren zur additiven Herstellung von Bauteilen aus einer Werkstoffkombination, wobei zwei verschiedene Werkstoffe bei einem selektiven Laserstrahlverfahren verwendet werden. Es wird hierbei zuerst der primäre Werkstoff aufgebracht, dann selektiv ausgehärtet und dann der überschüssige primäre Werkstoff entfernt um anschließend einen zweiten Werkstoff einzubringen der in einem weiteren Schritt ausgehärtet wird.

Mithilfe von additiven Fertigungsverfahren (manchmal auch generative Fertigungsverfahren genannt) können Einzelstücke und Kleinserien kostengünstig hergestellt werden. Hierzu wird ein formloser Werkstoff schichtweise aufgebracht und anschließend meist mit einem Laser selektiv ausgehärtet, wobei nach jedem Aufbringen einer Schicht formlosen Werkstoffes die jeweiligen Bereiche dieser aufgebrachten Werkstoffschicht mithilfe des Lasers ausgehärtet wird. Anschließend wird eine weitere Schicht formlosen Werkstoffes aufgebracht und wieder die entsprechenden Bereiche selektiv ausgehärtet, so dass sich nach und nach innerhalb des sich bildenden Pulverbettes ein Bauteil entsteht.

Im Bereich des selektiven Laserschmelzens bzw. Lasersinterns kommen meist pulverförmige Werkstoffe, wie beispielsweise Metalle, Keramiken und Polymere zum Einsatz, die Schicht für Schicht aufgetragen und mithilfe eines Lasers (oder einer anderen thermischen Energiequelle) selektiv ausgehärtet werden. Bei Metallen wird dabei das Pulver mithilfe der thermischen Energiequelle aufgeschmolzen, während Keramiken und Polymere üblicherweise gesintert werden. So kann das Bauteil Lage für Lage hergestellt werden. Nach Fertigstellung des Prozesses wird das ausgehärtete Bauteil aus dem Pulverbett entnommen und das nicht ausgehärtete Pulver, das durch die thermische Energiequelle nicht ausgehärtet wurde, entfernt.

Die hierfür verwendeten gattungsgemäßen Fertigungsanlagen zur Herstellung von Bauteilen mittels solcher additiver Fertigungsverfahren weisen dabei in der Regel einen Werkstoffvorratsspeicher auf, in dem der Werkstoff, beispielsweise ein pulverförmiger Werkstoff, vorrätig und bereitgestellt wird. Darüber hinaus weist eine solche Fertigungsanlage einen Bauteilraum auf, in dem der formlose Werkstoff Schicht für Schicht eingebracht und selektiv ausgehärtet wird, so dass in diesem Bauteilraum das Bauteil entsteht. Des Weiteren weist eine solche Fertigungsanlage meist eine Rakel auf, die ausgehend von dem Werkstoffvorratsspeicher hin zu dem Bauteilraum und über den Bauteilraum hinweg bewegbar ist, wobei bei einer derartigen Bewegung der Rakel der Werkstoff aus dem Werkstoffvorratsspeicher aufgenommen und in Richtung Bauteilraum transportiert und dann eine Schicht Werkstoff in dem Bauteilraum aufgebracht wird. Eine solche Werkstoffschicht kann dabei beispielsweise wenige Mikrometer bis einige Millimeter dick sein.

Nachdem mithilfe der Rakel eine Werkstoffschicht in dem Bauteilraum aufgebracht wurde, werden mithilfe einer thermischen Energiequelle, beispielsweise eines Lasers, basierend auf einem digitalen Datenmodell selektiv die Stellen in der Werkstoffschicht ausgehärtet, die in dieser Schicht das spätere Bauteil bilden sollen. Anschließend wird der Bauteilraum um die Dicke der gerade aufgebrachten Werkstoffschicht abgesenkt, so dass mithilfe der Rakel eine neue Werkstoffschicht in den Bauteilraum aufgebracht werden kann.

Nach dem Schicht für Schicht das Bauteil hergestellt wurde, wird es anschließend aus dem Bauteilraum entfernt, wobei hier das nicht ausgehärtete Pulver von dem ausgehärteten Bauteil getrennt wird, so dass das hergestellte Bauteil verbleibt.

Mit derartigen Verfahren lassen sich insbesondere komplizierte Bauteile mit vielen Hinterschneidungen, die sich ansonsten nur sehr schwer bis gar nicht anders herstellen lassen, Einzelstücke und Kleinserien herstellen, wobei zunehmend auch der Trend beobachtet wird, dass Ersatzteile überall auf der Welt hergestellt werden können, so dass auf Transportwege und Lagerhaltung verzichtet werden kann.

Der Nachteil derartiger additiver Herstellungsverfahren liegt dabei in der Tatsache begründet, dass meist nur ein einziger Werkstoff, der Lage für Lage mithilfe der Rakel in dem Bauteilraum (Fertigungskammer) verteilt und ausgehärtet wird. Gerade bei der Integration von Zusatzfunktionen in die zu fertigende Struktur stellt dies jedoch eine Einschränkung dar, da die mögliche Verwendung mehrerer Werkstoff die Variation der Eigenschaft als weiterer freier Parameter unterstützen könnte. Möglich wäre so z.B. die Einbringung elektronischer Leitungen oder Isolatoren in Metallstrukturen wenn auch Keramiken mitgedruckt werden können. Gleichwohl können Steifigkeit, Dichten, magnetische Eigenschaften und viele andere Dinge verändert werden.

Es ist daher Aufgabe der vorliegenden Erfindung ein verbessertes Verfahren und eine verbesserte Fertigungsanlage zur Herstellung eines Bauteils mittels eines additiven Fertigungsverfahrens anzugeben, mit dem sich Strukturen in das zu fertigende Bauteil integrieren lassen, die aus einem Werkstoff bestehen, der von dem primären Werkstoff des Bauteils verschieden sind.

Die Aufgabe wird mit der Fertigungsanlage gemäß Anspruch 1 sowie dem Verfahren gemäß Anspruch 9 erfindungsgemäß gelöst.

Gemäß Anspruch 1 wird eine gattungsgemäße Fertigungsanlage zur Herstellung eines Bauteils mittels eines additiven Fertigungsverfahrens vorgeschlagen, wobei die Fertigungsanlage einen Werkstoffvorratsspeicher, in dem ein primärer Werkstoff bereitgestellt wird, einen Bauteilraum (Fertigungskammer), in dem der primäre Werkstoff schichtweise aufgebracht und selektiv ausgehärtet wird, mindestens eine Rakel und eine Energiequelle zum selektiven Aushärten aufweist. Mithilfe der Rakel wird dabei Schicht für Schicht der primäre Werkstoff von dem Werkstoffvorratsspeicher in den Bauteilraum eingebracht, wobei nach jeder Werkstoffschicht ein selektives Aushärten mithilfe der Energiequelle erfolgt. Die Rakel ist dabei über den Bauteilraum bewegbar ausgebildet, um so die Werkstoffschichten aus dem primären Werkstoff bilden zu können.

Erfindungsgemäß ist eine Rakel vorgesehen, die über dem Bauteilraum bewegbar und zum Aufbringen wenigstens eines weiteren, sekundären Werkstoffes während des Bewegens über dem Bauteilraum ausgebildet ist. Der primäre Werkstoff ist dabei von dem sekundären Werkstoff verschieden und dient dabei insbesondere zur Integration weiterer Materialien in das Bauteil, das aus dem primären Werkstoff mithilfe des additiven Fertigungsverfahrens hergestellt werden soll. Die Rakel zum Aufbringen des sekundären Werkstoffes weist dabei eine Werkstoffentferneinrichtung auf, die in wenigstens einem vorgegebenen Sekundärwerkstoffabschnitt zum selektiven Entfernen eines bereits aufgebrachten primären Werkstoffes einer aufgebrachten oder aufzubringenden Werkstoffschicht während des Bewegens der Rakel über dem Bauteilraum ausgebildet ist. Während die Rakel über dem Bauteilraum bewegt wird, wird somit mithilfe der an der Rakel angeordneten Werkstoffentferneinrichtung innerhalb eines Sekundärwerkstoffabschnittes der bereits aufgebrachte primäre Werkstoff einer aufgebrachten oder aufzubringenden Werkstoffschicht entfernt, so dass nach dem Entfernen des primären Werkstoffes in dem Sekundärwerkstoffabschnitt kein primärer Werkstoff mehr enthalten ist.

Die Rakel weist erfindungsgemäß weiterhin eine Werkstoffdüse auf, die während des Bewegens der Rakel über dem Bauteilraum zum Aufbringen des der Rakel bereitgestellten sekundären Werkstoffes in dem wenigstens einen Sekundärwerkstoffabschnitt der aufgebrachten oder aufzubringenden Werkstoffschicht ausgebildet ist.

Mithilfe der Rakel der erfindungsgemäßen Fertigungsanlage wird es somit möglich, in den Bauteilraum bereits aufgebrachten primären Werkstoff der letzten Werkstoffschicht, die bereits vollständig aufgebracht oder noch nicht vollständig aufgebracht ist (als "aufzubringend" bezeichnet), abschnittsweise zu entfernen, so dass in den vorgegebenen Sekundärwerkstoffabschnitt kein primärer Werkstoff mehr vorhanden ist und ein Sekundärwerkstoff während des Bewegens der Rakel über dem Bauteilraum in diesen Sekundärwerkstoffabschnitt aufzubringen.

Nachdem in dem Sekundärwerkstoffabschnitt der primäre Werkstoff entfernt und der sekundäre Werkstoff aufgebracht wurde, wird mithilfe der thermischen Energiequelle der primäre Werkstoff sowie der sekundäre Werkstoff ausgehärtet, wobei hier vorzugsweise der primäre Werkstoff selektiv gemäß dem Datenmodell ausgehärtet und der sekundäre Werkstoff vorzugsweise vollständig (nicht selektiv) ausgehärtet wird, da das Einbringen des sekundären Werkstoffes bereits selektiv geschah.

Mithilfe der vorliegenden Erfindung wird es somit möglich, bei einem additiven Fertigungsverfahren neben einem primären Werkstoff mindestens einen weiteren sekundären Werkstoff zu verwenden, der in das Bauteil integriert wird. Dabei wird der sekundäre Werkstoff gezielt an denjenigen Positionen in dem Bauteil eingebracht, an denen tatsächlich auch dieser Werkstoff in dem späteren Bauteil integriert werden soll. Hierdurch entstehen nach Beendigung des Fertigungsverfahrens keine oder nur sehr wenige, nicht ausgehärtete Sekundärwerkstoffreste, so dass es nicht zu einer Vermischung mit dem übrigen primären Werkstoff, der nicht ausgehärtet wurde und das Pulverbett bildet, kommt. Hierdurch ist die Wahrscheinlichkeit einer Widerverwendung des primären Werkstoffes besonders hoch, was den Materialverschnitt und somit die Kosten eines Bauteils senkt. Gleichzeitig lassen sich aber weitere Materialien in das Bauteil integrieren, so dass die strukturellen Eigenschaften eines solchen Bauteils erweitert werden können.

Es ist daher ganz besonders vorteilhaft, wenn der sekundäre Werkstoff in dem primären Werkstoff eingebettet wird, wobei der primäre Werkstoff selektiv pro Schicht ausgehärtet wird, so dass auch nicht ausgehärtete Bereiche in der primären Werkstoffschicht verbleiben, während der sekundäre Werkstoff selektiv in die Werkstoffschicht eingebracht und vollständig ausgehärtet wird, wobei nur in denjenigen Bereichen der Werkstoffschicht, in denen in dem späteren Bauteil der sekundäre Werkstoff integriert sein soll, auch nur der sekundäre Werkstoff eingebracht wird.

Vorteilhafterweise wird nach dem vollständigen Aufbringen der Werkstoffschicht, die sowohl primären Werkstoff als auch sekundären Werkstoff enthalten kann, diese Werkstoffschicht ausgehärtet, wobei nacheinander oder gleichzeitig der primäre Werkstoff und der sekundäre Werkstoff beispielsweise mithilfe eines Lasers oder mehrerer Laser ausgehärtet wird. Der primäre Werkstoff wird dabei erst dann ausgehärtet, wenn der sekundäre Werkstoff in die aktuelle und selektiv auszuhärtende Werkstoffschicht eingebracht wurde.

In einer besonders vorteilhaften Ausführungsform weist die Rakel zum Aufbringen des primären Werkstoffes auch die Werkstoffentferneinrichtung und die Werkstoffdüse auf, so dass die Rakel zum Entfernen des primären Werkstoffes und zum Einbringen des sekundären Werkstoffes identisch ist mit der Rakel zum Aufbringen des primären Werkstoffes.

Dabei ist es äußerst günstig, wenn die Rakel und die Fertigungsanlage so ausgebildet sind, dass beim Bewegen der Rakel über dem Bauteilraum der primäre Werkstoff aufgebracht wird und während dieser Bewegung und dem Aufbringen des primären Werkstoffes selektiv bereits aufgebrachter primärer Werkstoff mithilfe der Werkstoffentferneinrichtung entfernt (innerhalb des Sekundärwerkstoffabschnittes) und in den entstehenden Freiraum dann der sekundäre Werkstoff eingebracht wird. Hierdurch wird es möglich, in einem Arbeitsschritt (einer Bewegung der Rakel über den Bauteilraum) eine Werkstoffschicht zu bilden, wobei diese Werkstoffschicht sowohl primären Werkstoff als auch in den Sekundärwerkstoffabschnitten oder dem Sekundärwerkstoffabschnitt den sekundären Werkstoff enthält. Anschließend kann dann mithilfe der thermischen Energiequelle selektiv der primäre Werkstoff und der sekundäre Werkstoff ausgehärtet werden.

Hierdurch wird die Möglichkeit geschaffen, in ein Bauteil, das mithilfe eines additiven Fertigungsverfahrens hergestellt werden soll, neben dem primären Werkstoff auch einen weiteren sekundären Werkstoff zu integrieren, ohne dabei die Fertigungszeit nennenswert zu erhöhen. Bei nahezu gleichbleibender Fertigungszeit lässt sich mit ein Bauteil schaffen, das aus mehreren verschiedenen Werkstoffarten besteht bzw. diese aufweist, so dass derartige Bauteile hinsichtlich ihrer Produktionskosten nicht teurer sein müssen.

Die Fertigungsanlage kann somit erfindungsgemäß mindestens zwei oder mehrere Rakeln aufweisen, wobei eine erste Rakel zum Aufbringen des primären Werkstoffes und wenigstens eine zweite Rakel zum Entfernen des primären Werkstoffs und zum Aufbringen des sekundären Werkstoffes vorgesehen sein können. Denkbar ist aber auch, dass die Fertigungsanlage lediglich eine einzelne Rakel aufweist, die sowohl den primären Werkstoff als auch den sekundären Werkstoff aufbringt.

In einer vorteilhaften Weiterbildung weist die Werkstoffentferneinrichtung einen Schieber auf, der von einer Ruheposition in eine Arbeitsposition und zurück bringbar ist. In der Ruheposition ragt der Schieber dabei nicht in die aufzubringende Werkstoffschicht hinein, mithin also jene Werkstoffschicht, die gerade mithilfe der Rakel aufgebracht werden soll. In einer Arbeitsposition wird der Schieber dabei in Richtung aufzubringende Werkstoffschicht gebracht und ragt somit in die aufzubringende Werkstoffschicht hinein, so dass bei einer Bewegung der Rakel über dem Bauteilraum der primäre Werkstoff, der soeben durch die Rakel aufgebracht wurde, entfernt wird, wenn der Schieber von seiner Ruheposition in die Arbeitsposition gewechselt hat. Mit anderen Worten, in der Arbeitsposition schiebt der Schieber den soeben aufgebrachten primären Werkstoff in Bewegungsrichtung, so dass an dieser Stelle ein Bereich entsteht, in dem kein primärer Werkstoff enthalten ist.

Der Schieber wird dabei vorzugsweise am Beginn eines Sekundärwerkstoffabschnittes von seiner Ruheposition in seine Arbeitsposition gebracht und verbleibt während der Bewegung der Rakel solange in der Arbeitsposition, bis die Rakel bzw. der Schieber das Ende des Sekundärwerkstoffabschnittes erreicht hat. Der Schieber wird dann von seiner Arbeitsposition in die Ruheposition gebracht, so dass dann kein weiterer primärer Werkstoff mehr entfernt wird.

Das Verfahren des Schiebers von der Ruheposition in die Arbeitsposition und zurück kann dabei mithilfe von Piezo- oder Magnetaktuatoren erfolgen, so dass bei einer sehr schnellen Bewegung der Rakel auch ein Wechsel zwischen Ruheposition und Arbeitsposition und zurück sehr schnell möglich ist.

Der Schieber steht dabei vorzugsweise und im Wesentlichen orthogonal zu der aufzubringenden Werkstoffschicht. Denkbar ist aber auch, dass der Schieber unter einem vorgegebenen Winkel zu der Werkstoffschicht angeordnet ist.

In einer alternativen Ausführungsform hat die Werkstoffentferneinrichtung eine Absaugvorrichtung, die von einem nicht saugenden Betriebszustand in einen saugenden Betriebszustand zurück bringbar ist. Im saugenden Betriebszustand ist die Absaugvorrichtung dabei ausgebildet, im Bereich der Rakel den bereits aufgebrachten primären Werkstoff der aufzubringenden Werkstoffschicht abzusaugen, so dass ein Bereich entsteht, in dem kein primärer Werkstoff mehr vorhanden ist. Dabei wird in den Sekundärwerkstoffabschnitten der Absaugvorrichtung der primäre Werkstoff entfernt, so dass in diesem Bereich dann der sekundäre Werkstoff einbringbar ist.

Auch hier ist es vorteilhaft, wenn die Absaugvorrichtung am Beginn des Sekundärwerkstoffabschnittes von einem nicht saugenden Betriebszustand in einen saugenden Betriebszustand wechselt, um den primären Werkstoff zu entfernen, wobei von einem saugenden Betriebszustand in einen nicht saugenden Betriebszustand beim Erreichen des Endes des Sekundärwerkstoffabschnittes gewechselt wird.

In einer weiteren vorteilhaften Ausführungsform weist die Rakel zum Aufbringen des mindestens einen sekundären Werkstoffes mindestens einen Sekundärwerkstoffbehälter auf, der zum Bereitstellen des mindestens einen sekundären Werkstoffes ausgebildet ist. Der Sekundärwerkstoffbehälter der Rakel steht dabei kommunizierend mit der Werkstoffdüse zum Aufbringen des sekundären Werkstoffes kommunizierend in Verbindung, so dass bei Aktivierung der Werkstoffdüse der primäre Werkstoff aus dem Sekundärwerkstoffbehälter der Rakel in den Sekundärwerkstoffabschnitt eingebracht werden kann.

Denkbar ist aber auch, dass die Rakel über eine flexible Schlauchleitung mit einem ortsfesten Sekundärwerkstoffbehälter kommunizierend in Verbindung steht, über den dann der primäre Werkstoff der Werkstoffdüse zugeführt wird.

Die Werkstoffdüse ist dabei erfindungsgemäß so ausgebildet, dass sie von einem Ruhezustand in einen Arbeitszustand und zurück bringbar ist, wobei in einem Ruhezustand die Werkstoffdüse keinen primären Werkstoff aufbringt, während die Werkstoffdüse im Arbeitszustand in den dafür vorgesehenen Hohlraum den entsprechenden primären Werkstoff aufbringt.

Es ist günstig, wenn die Werkstoffentferneinrichtung der Rakel in Bewegungsrichtung der Rakel vor der Werkstoffdüse an der Rakel angeordnet ist, so dass bei einer Bewegung der Rakel über den Bauteilraum in einem einzigen Prozessschritt für jede aufgebrachte Werkstoffschicht gleichzeitig der primäre Werkstoff in dem vorgegeben Sekundärwerkstoffabschnitt entfernt und zeitgleich in dem entstehenden Hohlraum der sekundäre Werkstoff mithilfe der Werkstoffdüse eingebracht wird.

Mit anderen Worten, hat sich die Rakel einmal über den Bauteilraum hinweg bewegt, so hat sie bei dieser einen Bewegung in Bezug auf die aufgebrachte Werkstoffschicht sowohl den primären Werkstoff im Sekundärwerkstoffabschnitt entfernt als auch in den Sekundärwerkstoffabschnitt den sekundären Werkstoff eingebracht.

Grundsätzlich ist die Werkstoffentferneinrichtung ausgebildet, von einem Ruhezustand in einen Arbeitszustand zu wechseln, wobei im Ruhezustand die Werkzeugentferneinrichtung keinen primären Werkstoff entfernt, während die Werkzeugentferneinrichtung im Arbeitszustand den primären Werkstoff entfernt. Es ist dabei ganz besonders vorteilhaft, wenn die Werkstoffdüse von einem Ruhezustand in einen Arbeitszustand zu einem Zeitpunkt wechselt, zu dem die Werkzeugentferneinrichtung von einem Ruhezustand in einen Arbeitszustand wechselt. Dieser Zeitpunkt ist dann, wenn die Rakel den Beginn des Sekundärwerkstoffabschnittes erreicht hat. Am Ende des Sekundärwerkstoffabschnittes wechseln die Werkstoffdüse und die Werkzeugentferneinrichtung im Wesentlichen gleichzeitig von dem Arbeitszustand zurück in den Ruhezustand.

Des Weiteren ist es vorteilhaft, wenn die Fertigungsanlage als Energiequelle einen Laser hat, der zum selektiven Aushärten des primären und des mindestens einen sekundären Werkstoffes ausgebildet ist, so dass ein und dieselbe Lasereinrichtung sowohl den primären Werkstoff als auch den sekundären Werkstoff aushärten kann. Unterschieden sich die beiden Materialien des primären und des sekundären Werkstoffes hinsichtlich der benötigten Aushärtenergie, so ist es vorteilhaft, wenn die thermische Energiequelle mehr als einen Laser hat, wobei ein erster Laser zum selektiven Aushärten des eingebrachten primären Werkstoffes und wenigstens ein zweiter Laser zum Aushärten des mindestens einen sekundären Werkstoffes ausgebildet ist.

Die Aufgabe wird im Übrigen auch mit den Verfahren gemäß Anspruch 9 erfindungsgemäß gelöst, wobei gemäß Anspruch 9 ein Verfahren zur Herstellung eines Bauteils mittels eines additiven Fertigungsverfahrens, bei dem ein formloser Werkstoff schichtweise aufgebracht und basierend auf einem digitalen Datenmodell schichtweise selektiv ausgehärtet wird, beansprucht wird. Erfindungsgemäß ist dabei vorgesehen, dass zunächst der primäre Werkstoff schichtweise aufgebracht wird, und zwar mittels einer Rakel einer Fertigungsanlage. Dabei wird bei mindestens einer Werkstoffschicht der primäre Werkstoff in wenigstens einem vorgegebenen Sekundärwerkstoffabschnitt mittels einer Werkstoffentferneinrichtung der Rakel selektiv entfernt und in diesen Sekundärwerkstoffabschnitt dann anstelle des primären Werkstoffes ein sekundärer Werkstoff mithilfe einer Werkstoffdüse der Rakel eingebracht. Nachdem der mindestens eine sekundäre Werkstoff in den Sekundärwerkstoffabschnitt eingebracht wurde, wird sowohl der primäre Werkstoff selektiv als auch der sekundäre Werkstoff (ggf. auch selektiv) ausgehärtet, so dass sich hierdurch ein Bauteil herstellen lässt.

Vorteilhafte Ausgestaltungen der Erfindung finden sich in den entsprechenden Unteransprüchen.

Die Erfindung wird anhand der beigefügten Figuren beispielhaft näher erläutert. Es zeigen:
- Figur 1: - schematische Darstellung einer Fertigungsanlage zur Durchführung eines additiven Fertigungsverfahrens;
- Figur 2: - schematische Darstellung eines hergestellten Bauteils, das aus mehr als einem Werkstoff besteht;
- Figur 3: - schematische Darstellung eines Ablaufs des erfindungsgemäßen Verfahrens.

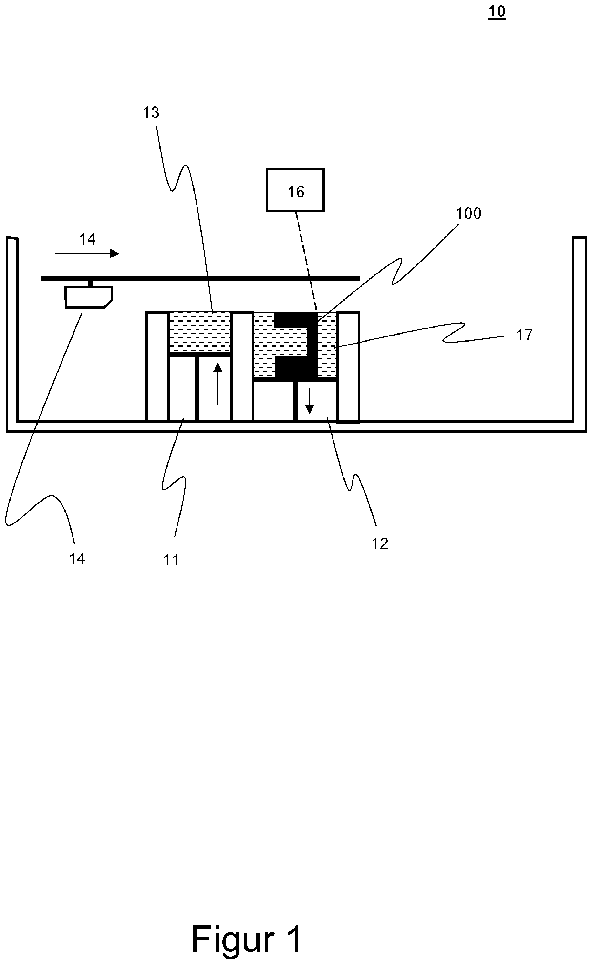

Figur 1 zeigt schematisch eine Fertigungsanlage 10, die einen Werkstoffvorratsspeicher 11 und einen Bauteilraum 12 aufweist. In dem Werkstoffvorratsspeicher 11 wird dabei ein primärer Werkstoff 13 bereitgestellt, aus dem das herzustellende Bauteil 100 im Wesentlichen hergestellt werden soll.

Die Fertigungsanlage 10 weist des Weiteren eine Rakel 14 auf, die im Ausführungsbeispiel der Figur 1 derart ausgebildet ist, dass eine Bewegung in die durch den Pfeil 15 gekennzeichnete Bewegungsrichtung zum Aufbringen des primären Werkstoffes 13 in den Bauteilraum 12 ausführbar ist.

Hierfür bewegt sich die Rakel 14 zunächst über den Werkstoffvorratsspeicher 11 und nimmt dabei eine Schicht primären Werkstoff 13 auf, der bei einer weiteren Bewegung der Rakel 14 in die Bewegungsrichtung 15 in den Bauteilraum 12 eingebracht bzw. aufgebracht wird. Anschließend fährt die Rakel 14 wieder zurück in die Ausgangsposition (gezeigt in Figur 1), wobei dann der Werkstoffvorratsspeicher 11 um eine Werkstoffschicht nach oben angehoben wird, während der Bauteilraum 12 um eine Werkstoffschicht nach unten abgesenkt wird.

Die Fertigungsanlage 10 weist des Weiteren einen Laser 16 auf, der nach dem Einbringen bzw. Aufbringen einer Werkstoffschicht aus primärem Werkstoff 13 selektiv den primären Werkstoff 13 in dieser Schicht an denjenigen Stellen aushärtet, an denen in der jeweiligen Schicht später auch das Bauteil 100 liegen soll.

Wurde der primäre Werkstoff 13 im Bauteilraum 12 selektiv an den vorgegebenen Positionen ausgehärtet, so beginnt die Rakel 14 erneut, eine weitere Werkstoffschicht aus primärem Werkstoff 13 in den Bauteilraum 12 aufzubringen, so dass Schicht für Schicht das Bauteil 100 hergestellt wird.

Die Rakel 14 ist dabei derart ausgebildet, wie später noch im Detail gezeigt, dass nicht nur ein primärer Werkstoff 13 in dem Bauteilraum 12 eingebracht wird, sondern auch weitere sekundäre Werkstoffe, die dann Bestandteil des Bauteils 100 werden.

Am Ende des Verfahrens befindet sich das Bauteil 100 eingebettet in ein Pulverbett 17, das den primären Werkstoff 13 in der nicht ausgehärteten Form enthält. Das Bauteil 100 kann nach Fertigstellung aus diesem Pulverbett 17 entnommen werden.

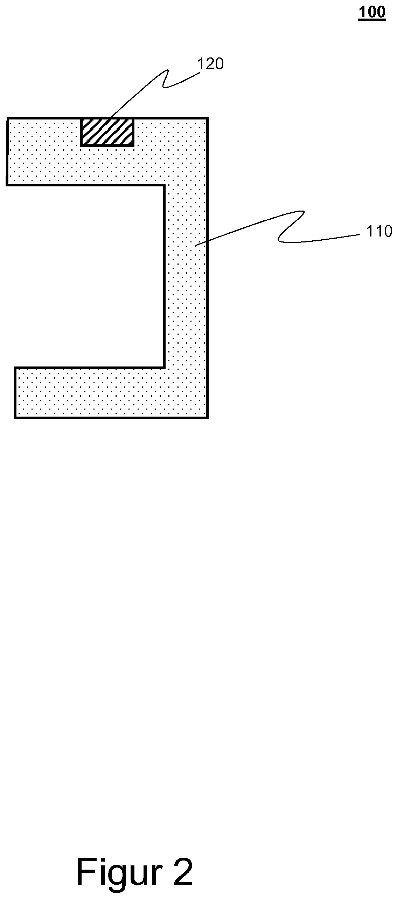

Figur 2 zeigt ein hergestelltes Bauteil 100, das als Ausführungsbeispiel gemäß der Fertigungsanlage 10 aus Figur 1 herstellbar ist. Das Bauteil 100 weist dabei einen ausgehärteten primären Werkstoff 110 auf, aus dem das Bauteil 100 vorwiegend besteht. In diesen ausgehärteten primären Werkstoff 110 wurde darüber hinaus ein sekundärer Werkstoff eingebracht, der als ausgehärteter sekundärer Werkstoff 120 in das Bauteil integriert ist und im Zuge des Herstellungsverfahrens, wie es mit der Fertigungsanlage 10 gemäß Figur 1 durchführbar ist, hergestellt wurde.

So ist es beispielsweise denkbar, dass der ausgehärtete primäre Werkstoff 110 aus einem Polymerwerkstoff besteht oder einen solchen Polymerwerkstoff aufweist, der durch Sintern ausgehärtet wird, während der ausgehärtete sekundäre Werkstoff 120 ein Metallwerkstoff ist, der durch Laserschmelzen ausgehärtet wurde.

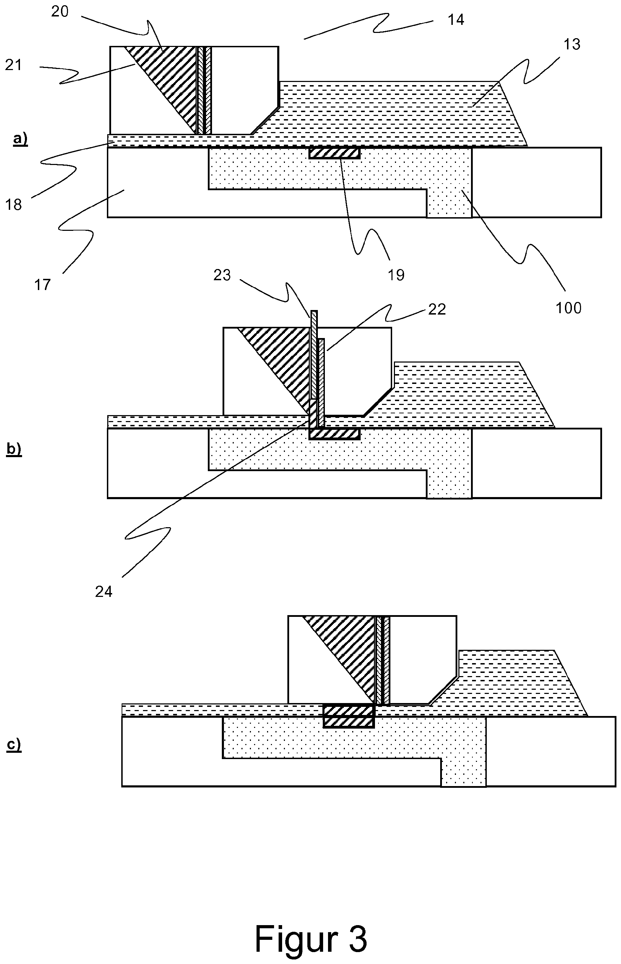

Figur 3 zeigt schematisch eine Rakel 14 gemäß einer Ausführungsform zum Einbringen eines sekundären Werkstoffes 20. Die Rakel 14 hat im Ausführungsbeispiel der Figur 3 dabei zwei Aufgaben, nämlich zum einen eine Schicht primären Werkstoffes 13 in den Bauteilraum 12 einzubringen und zum anderen selektiv an vorgegebenen Positionen den sekundären Werkstoff 20 in den Bauteilraum 12 einzubringen.

Hierfür weist die Rakel 14 einen Sekundärwerkstoffbehälter 21 auf, in dem der sekundäre Werkstoff 20 der Rakel 14 bereitgestellt wird. Darüber hinaus weist die Rakel 14 eine Werkstoffentferneinrichtung 22 und eine Werkstoffdüse 23 auf, um den primären Werkstoff 13 an einer vorgegebenen Position zu entfernen und den sekundären Werkstoff 20 in den entstehenden Hohlraum einzufüllen.

Im oberen dargestellten Schritt a) bewegt sich die Rakel 14 über den Bauteilraum 12 und verteilt dabei den primären Werkstoff 13 derart, dass eine feine Werkstoffschicht 18 dort entsteht, wo die Rakel bereits darüber gefahren bzw. darüber bewegt wurde. Sowohl die Werkstoffdüse 23 als auch die Werkstoffentferneinrichtung 22 befinden sich dabei in einem Ruhezustand, d.h. die Werkstoffentferneinrichtung 22 kann kein primären Werkstoff aus der Werkstoffschicht 18 entfernen und die Werkstoffdüse 23 kann keinen sekundären Werkstoff 20 einbringen.

Im Ausführungsbeispiel der Figur 3 und der dort gezeigten Rakel 14 ist die Werkstoffentferneinrichtung 22 in Form eines Schiebers ausgebildet, der in Richtung Bauteil (unter der Rakel 14) in eine Arbeitsposition bzw. einen Arbeitszustand bringbar ist. Die Werkstoffdüse 23 ist im Ausführungsbeispiel der Figur 3 ebenfalls als Schieber ausgebildet und kann dabei von einer Ruheposition ebenfalls in eine Arbeitsposition (nach oben) gebracht werden, so dass im unteren Bereich der Rakel 14 eine Öffnung 24 entsteht, aus der dann der sekundäre Werkstoff 21 aus dem Sekundärwerkstoffbehälter 20 in den vorgesehenen Hohlraum entweichen kann.

Dies ist im mittleren Schritt b) gezeigt. Am Beginn des Sekundärwerkstoffabschnittes 19, der den Bereich markiert, in dem der sekundäre Werkstoff 20 in die aktuell aufzubringende Werkstoffschicht 18 eingebracht werden soll, wird der Schieber 22 (Werkstoffentferneinrichtung) in seine Arbeitsposition gebracht, so dass der Schieber 22 in die Werkstoffschicht 18, die von der Rakel 14 bereits eingebracht wurde, hineinragt. Im Wesentlichen gleichzeitig wird die Werkstoffdüse 23 in eine Arbeitsposition verfahren, so dass die Öffnung 24 entsteht und der sekundäre Werkstoff 21 eingebracht werden kann.

Fährt nun die Rakel 14 weiter in Bewegungsrichtung 15, so schiebt der Schieber 22 den vor ihm liegenden Teil des primären Werkstoffes 13, der als Werkstoffschicht 18 bereits von der Rakel 14 eingebracht wurde, vor sich her und somit weg, so dass im Sekundärwerkstoffabschnitt 19 der primäre Werkstoff 13 entfernt wird. Gleichzeitig wird in den entstehenden Hohlraum der sekundäre Werkstoff 21 eingefüllt, da aufgrund der Bewegung ein Hohlraum entsteht, der durch den sekundären Werkstoff 21 geführt werden kann. Da sich die Werkstoffdüse 23 in ihrer Arbeitsposition befindet, wird somit der sekundäre Werkstoff 21 durch die Öffnung 24 in den Sekundärwerkstoffabschnitt 19 eingebracht.

Erreicht die Rakel 14 das Ende des Sekundärwerkstoffabschnittes 19, so fährt der Schieber 22 zurück in seine Ruheposition, während die Werkstoffdüse 23 ebenfalls in ihren Ruhezustand wechselt und geschlossen ist. In diesem Zustand wird weder der primäre Werkstoff 13 durch den Schieber beim weiteren Verfahren der Rakel 14 entfernt, noch wird der sekundäre Werkstoff 20 in die Werkstoffschicht 18 eingebracht.

Dies ist im Schritt c) dargestellt. Nach dem Schritt c) kann die Rakel 14 weiter in Bewegungsrichtung 15 bewegt werden und weiter den primären Werkstoff 13 in die Werkstoffschicht 18 einbringen. Am Ende wird dann selektiv die so hergestellte Werkstoffschicht 18 basierend auf einem digitalen Datenmodell ausgehärtet, wobei beispielsweise mithilfe eines ersten Lasers selektiv der primäre Werkstoff ausgehärtet wird, und zwar an den Stellen, an denen das Bauteil dieser Schicht vorgesehen ist, während der sekundäre Werkstoff mithilfe eines zweiten Lasers ausgehärtet wird.

Am Ende des Verfahrens entsteht somit ein Bauteil, das neben dem ausgehärteten primären Werkstoff auch einen ausgehärteten sekundären Werkstoff enthält.

Die Werkstoffdüse 23 und/oder der Schieber 22 können dabei geöffnet und geschlossen werden mithilfe von Piezo- oder Magnetaktuatoren. Die Werkstoffdüse 23 und der Schieber 22 können dabei auch das gleiche Bauteil sein, so dass beispielsweise die Rakel 14 dergestalt ist, dass beim Verfahren des Schildes 22 von der Ruheposition in die Arbeitsposition gleichzeitig eine Öffnung 24 entsteht, wodurch der sekundäre Werkstoff eingebracht werden kann.

Die Ausfahrtiefe des Schildes 22 kann dabei variabel eingestellt werden, um so verschiedene Schichtdicken, die mithilfe der Rakel eingebracht werden, abzubilden. Denn die Ausfahrtiefe ist vorzugsweise so bemessen, dass sie der Dicke einer Werkstoffschicht 18 entspricht.

Dabei ist es denkbar, dass über die Breite der Rakel 14 (aus der Betrachtungsebene heraus) viele separat ansteuerbare Werkstoffdüsen 23 und/oder Werkstoffentferneinrichtungen 22 vorgesehen sind, die auch separat ansteuerbar sind, so dass über die Breite der Rakel 14 hinweg an unterschiedlichen Positionen in der Breite der Werkstoffschicht 18 der sekundäre Werkstoff 20 einbringbar ist. Der sekundäre Werkstoff 20 kann somit entlang der Querrichtung selektiv verteilt ausgebracht werden.

Dabei kann ein optisches Erfassungssystem vorgesehen sein, das die Lage des sekundären Werkstoffes 20 anhand der optischen Eigenschaft, beispielsweise mithilfe einer Kamera erfasst, kontrolliert und ggf. die Laser anpasst.

Denkbar ist es auch, dass mehr als ein sekundärer Werkstoff 20 verwendet wird, was beispielsweise dergestalt sein kann, dass mehrere Sekundärwerkstoffbehälter 21 in Bezug auf die Bewegungsrichtung hintereinander oder in Querrichtung über die Breite der Rakel 14 verteilt angeordnet sind. Somit lassen sich verschiedenste Kombinationen von sekundären Werkstoffen in eine Werkstoffschicht 18 aus primärem Werkstoff 13 einbringen.

Der Vorteil dieses Verfahrens besteht darin, dass gleichzeitig ein primärer Werkstoff und ein oder mehrere sekundäre Werkstoffe in einem Arbeitsgang appliziert werden können, was das Verfahren prinzipiell genauso schnell macht, wie die Verfahren, die nur einen Werkstoff verarbeiten. Außerdem können bei der Verwendung mehrerer Laser beide Werkstoffe gleichzeitig gehärtet werden, was die Prozesszeiten weiter verkürzt.

### Bezugszeichenliste

- 10: - Fertigungsanlage
- 11: - Werkstoffvorratsspeicher
- 12: - Bauteilraum (Fertigungskammer)
- 13: - primärer Werkstoff
- 14: - Rakel
- 15: - Bewegungsrichtung der Rakel
- 16: - Laser
- 17: - Pulverbett
- 18: - Werkstoffschicht
- 19: - Sekundärwerkstoffabschnitt
- 20: - sekundärer Werkstoff
- 21: - Sekundärwerkstoffbehälter
- 22: - Werkstoffentferneinrichtung
- 23: - Werkstoffdüse
- 24: - Öffnung der Werkstoffdüse

## Patentansprüche

1. Fertigungsanlage (10) zur Herstellung eines Bauteils mittels eines additiven Fertigungsverfahrens, bei dem ein formloser Werkstoff schichtweise aufgebracht und basierend auf einem digitalen Datenmodell selektiv ausgehärtet wird, wobei die Fertigungsanlage (10) aufweist:
- einen Werkstoffvorratsspeicher (11), in dem ein primärer Werkstoff (13) bereitgestellt wird,
- einen Bauteilraum (12), in dem der primäre Werkstoff (13) schichtweise aufgebracht und selektiv ausgehärtet wird,
- mindestens eine Rakel (14), die über dem Bauteilraum (12) bewegbar und zum schichtweisen Aufbringen des durch den Werkstoffvorratsspeicher (11) bereitgestellten primären Werkstoffes (13) während des Bewegens über dem Bauteilraum (12) ausgebildet ist, und
- eine Energiequelle, die zum selektiven Aushärten des schichtweise aufgebrachten primären Werkstoffes (13) in dem Bauteilraum (12) ausgebildet ist,
- eine Rakel (14) vorgesehen ist, die über dem Bauteilraum (12) bewegbar und zum Aufbringen wenigstens eines weiteren, sekundären Werkstoffes (20) während des Bewegens über dem Bauteilraum (12) ausgebildet ist,
- **dadurch gekennzeichnet, dass** die Rakel (14) eine Werkstoffentferneinrichtung (22) hat, die in wenigstens einem vorgegebenen Sekundärwerkstoffabschnitt (19) zum selektiven Entfernen eines bereits aufgebrachtem primären Werkstoffes (13) einer aufgebrachten oder aufzubringenden Werkstoffschicht (18) während des Bewegens der Rakel (14) über dem Bauteilraum (12) ausgebildet ist,
- wobei die Rakel (14) eine Werkstoffdüse (23) hat, die während des Bewegens der Rakel (14) über dem Bauteilraum (12) zum Aufbringen des der Rakel (14) bereitgestellten sekundären Werkstoffes (20) in den wenigstens einen Sekundärwerkstoffabschnitt (19) der aufgebrachten oder aufzubringenden Werkstoffschicht (18) ausgebildet ist, und
- wobei die Energiequelle zum Aushärten des mindestens einen aufgebrachten sekundären Werkstoffes (20) ausgebildet ist.

2. Fertigungsanlage (10) nach Anspruch 1, **dadurch gekennzeichnet, dass** die Rakel (14) zum Aufbringen des primären Werkstoffes (13) die Rakel (14) zum Aufbringen des mindestens einen sekundären Werkstoffes (20) ist und die Werkstoffentferneinrichtung (22) und die Werkstoffdüse (23) aufweist.

3. Fertigungsanlage (10) nach Anspruch 2, **dadurch gekennzeichnet, dass** die Rakel (14) zum Aufbringen des primären Werkstoffes (13) sowie zum Entfernen des primären Werkstoffes (13) und Aufbringen des mindestens einen sekundären Werkstoffes (20) während einer Bewegung der Rakel (14) über dem Bauteilraum (12) zum Aufbringen einer Werkstoffschicht (18) ausgebildet ist.

4. Fertigungsanlage (10) nach einem der Ansprüche 1 bis 3, **dadurch gekennzeichnet, dass** die Werkstoffentferneinrichtung (22) einen Schieber hat, der von einer Ruheposition, in der der Schieber nicht in die aufzubringende Werkstoffschicht (18) hineinragt, in eine Arbeitsposition, in der der Schieber in die aufzubringende Werkstoffschicht (18) hineinragt, und zurück bringbar ist, wobei der Schieber in der Arbeitsposition beim Bewegen der Rakel (14) über dem Bauteilraum (12) zum Schieben des bereits aufgebrachten primären Werkstoffes (13) der aufgebrachten oder aufzubringenden Werkstoffschicht (18) in Bewegungsrichtung der Rakel (14) ausgebildet ist, so dass in dem Sekundärwerkstoffabschnitt (19) mittels des Schiebers der primäre Werkstoff (13) entfernt wird.

5. Fertigungsanlage (10) nach einem der Ansprüche 1 bis 3, **dadurch gekennzeichnet, dass** die Werkstoffentferneinrichtung (22) eine Absaugvorrichtung hat, die von einem nichtsaugenden Betriebszustand in einen saugenden Betriebszustand und zurück bringbar ist, wobei die Absaugvorrichtung im saugenden Betriebszustand zum Absaugen des bereits aufgebrachten primären Werkstoffes (13) der aufgebrachten oder aufzubringenden Werkstoffschicht (18) ausgebildet ist, so dass in dem Sekundärwerkstoffabschnitt (19) mittels der Absaugvorrichtung der primäre Werkstoff (13) entfernt wird.

6. Fertigungsanlage (10) nach einem der vorhergehenden Ansprüche, **dadurch gekennzeichnet, dass** die Rakel (14) zum Aufbringen des mindestens einen sekundären Werkstoffes (20) mindestens einen Sekundärwerkstoffbehälter (21) hat, der zum Bereitstellen des mindestens einen sekundären Werkstoffes (20) ausgebildet und mit der Werkstoffdüse (23) zum Aufbringen des bereitgestellten sekundären Werkstoffes (20) kommunizierend in Verbindung steht.

7. Fertigungsanlage (10) nach einem der vorhergehenden Ansprüche, **dadurch gekennzeichnet, dass** die Werkstoffdüse (23) in Bewegungsrichtung der Rakel (15) hinter der Werkstoffentferneinrichtung (22) angeordnet ist.

8. Fertigungsanlage (10) nach einem der vorhergehenden Ansprüche, **dadurch gekennzeichnet, dass** die Fertigungsanlage (10) als Energiequelle einen Laser (16) und/oder eine Elektronenquelle zum Erzeugen eines Elektronenstrahls hat, der zum selektiven Aushärten des primären und des mindestens einen sekundären Werkstoffes ausgebildet ist, oder dass die Fertigungsanlage (10) als Energiequelle mehr als einen Laser (16) und/oder mehr als eine Elektronenquelle zum Erzeugen eines Elektronenstrahls hat, wobei ein erster Laser (16) oder eine erste Elektronenquelle zum selektiven Aushärten des eingebrachten primären Werkstoffes (13) und wenigstens ein zweiter Laser (16) oder zweite Elektronenquelle zum Aushärten des mindestens einen sekundären Werkstoffes (20) ausgebildet sind.

9. Verfahren zur Herstellung eines Bauteils mittels eines additiven Fertigungsverfahrens, bei dem ein formloser Werkstoff schichtweise aufgebracht und basierend auf einem digitalen Datenmodell selektiv ausgehärtet wird, mit den Schritten:
- schichtweises Aufbringen eines primären Werkstoffes (13) mittels einer Rakel (14) einer Fertigungsanlage (10),
- selektives Entfernen des primären Werkstoffes (13) einer aufgebrachten oder aufzubringenden Werkstoffschicht (18) in wenigstens einem vorgegebenen Sekundärwerkstoffabschnitt (19) der aufgebrachten oder aufzubringenden Werkstoffschicht (18) mittels einer Werkstoffentferneinrichtung (22) der Rakel (14),
- Aufbringen wenigstens eines sekundären Werkstoffes (20) in den wenigstens einen Sekundärwerkstoffabschnitt (19) der aufgebrachten oder aufzubringenden Werkstoffschicht (18) mittels einer Werkstoffdüse (23) der Rakel (14), und
- Aushärten des primären Werkstoffes (13) und des wenigstens einen sekundären Werkstoffes (20) mittels einer Energiequelle, nach dem der mindestens eine sekundäre Werkstoff (20) in den Sekundärwerkstoffabschnitt (19) aufgebracht wurde.

10. Verfahren nach Anspruch 9, **dadurch gekennzeichnet, dass** die Rakel (14) zum Aufbringen des primären Werkstoffes (13) und/oder des mindestens einen sekundären Werkstoffes (20) über einen Bauteilraum (12) bewegt wird.

11. Verfahren nach Anspruch 9 oder 10, **dadurch gekennzeichnet, dass** zum selektiven Entfernen des primären Werkstoffes (13) ein Schieber der Rakel (14) von einer Ruheposition, in der der Schieber nicht in die aufzubringende Werkstoffschicht (18) hineinragt, in eine Arbeitsposition, in der der Schieber in die aufzubringende Werkstoffschicht (18) hineinragt, gebracht wird, um während des Bewegens der Rakel (14) über einen Bauteilraum (12) in wenigstens einem der Sekundärwerkstoffabschnitte (19) mittels des Schiebers den primären Werkstoff (13) zu entfernen.

12. Verfahren nach Anspruch 11, **dadurch gekennzeichnet, dass** der Schieber am Anfang eines Sekundärwerkstoffabschnittes (19) in die Arbeitsposition gebracht wird und in dieser verbleibt, bis das Ende des Sekundärwerkstoffabschnittes (19) erreicht wurde, wobei dann der Schieber von der Arbeitsposition in die Ruheposition gebracht wird.

13. Verfahren nach einem der Ansprüche 9 bis 12, **dadurch gekennzeichnet, dass** eine Fertigungsanlage (10) nach einem der Ansprüche 1 bis 8 bereitgestellt wird, wobei das Verfahren zur Herstellung des Bauteils gemäß einem der Ansprüche 9 bis 12 mittels der bereitgestellten Fertigungsanlage (10) durchgeführt wird.

## Claims

1. Manufacturing plant (10) for manufacturing a component by means of an additive manufacturing process, in which a formless material is applied layer-wise and selectively cured on the basis of a digital data model, wherein the manufacturing plant (10) comprises:
= a material reservoir (11) in which a primary material (13) is provided,
= a component space (12) in which the primary material (13) is applied layer-wise and selectively cured,
= at least one squeegee (14) which can be moved over the component space (12) and is formed for a layer-wise application of the primary material (13), which is provided by the material reservoir (11), over the component space (12) during movement, and
= an energy source formed for selectively curing the layer-wise applied primary material (13) in the component space (12),
= a squeegee (14) is provided which can be moved over the component space (12) and is formed for applying at least one further secondary material (20) during the movement over the component space (12), **characterised in that**
= the squeegee (14) has a material removal device (22) formed for selectively removing within at least one predetermined secondary material section (19) an already applied primary material (13) of an material layer (18) applied or to be applied during movement of the squeegee (14) over the component space (12),
= wherein the squeegee (14) having a material nozzle (23) which, during movement of the doctor blade (14) over the component space (12), is formed for applying the secondary material (20) provided to the squeegee (14) into the at least one secondary material section (19) of the material layer (18) applied or to be applied, and
= wherein the energy source being formed for curing the at least one applied secondary material (20).

2. Manufacturing plant (10) according to claim 1, **characterized in that** the squeegee (14) for applying the primary material (13) is the squeegee (14) for applying the at least one secondary material (20) and has the material removal device (22) and the material nozzle (23).

3. Manufacturing plant (10) according to claim 2, **characterized in that** the squeegee (14) is formed for applying the primary material (13) and for removing the primary material (13) and for applying the at least one secondary material (20) during one movement of the squeegee (14) over the component space (12) for applying a material layer (18).

4. Manufacturing plant (10) according to one of claims 1 to 3, **characterized in that** the material removal device (22) has a slideer which can be moved from a rest position, in which the slider does not extend into the material layer (18) to be applied, to a working position, in which the slider extends into the material layer (18) to be applied, and back, wherein the slider is formed to push away the already applied primary material (13) of the applied or to be applied material layer (18) in the direction of movement of the squeegee (14), when the squeegee (14) is in working position, with the result that in the secondary material section (19), by means of the slider, the primary material (13) is removed.

5. Manufacturing plant (10) according to one of claims 1 to 3, **characterized in that** the material removal device (22) has a suction device which can be moved from a non-sucking operating state into a sucking operating state and back, wherein the suction device is formed to suck the already applied primary material (13) of the applied or to be applied material layer (18), when the suction device in the sucking operating state, with the result that in the secondary material section (19), by means of the suction device, the primary material (13) is removed.

6. Manufacturing plant (10) according to one of the preceding claims, **characterized in that** the sqeegee (14) for applying the at least one secondary material (20) has at least one secondary material container (21) which is formed to provide the at least one secondary material (20) and communicates with the material nozzle (23) for applying the provided secondary material (20).

7. Manufacturing plant (10) according to one of the preceding claims, **characterized in that** the material nozzle (23) is arranged behind the material removal device (22) in the direction of movement of the squeegee (15).

8. Manufacturing plant (10) according to one of the preceding claims, **characterized in that** the manufacturing plant (10) has as energy source a laser (16) and/or an electron source for generating an electron beam which is formed for selectively curing the primary and the at least one secondary material, or **characterized in that** the manufacturing plant (10) has as energy source more than one laser (16) and/or more than one electron source for generating an electron beam, wherein a first laser (16) or a first electron source is formed for selectively curing the introduced primary material (13) and at least one second laser (16) or second electron source is formed for curing the at least one secondary material (20).

9. Method for manufacturing a component by means of an additive manufacturing process, in which a formless material is applied layer-wise and selectively cured on the basis of a digital data model, comprising the steps of:
= layer-wise application of a primary material (13) by means of a squeegee (14) of a manufacturing plant (10),
= selective removal of the primary material (13) of an material layer (18) applied or to be applied in at least one predetermined secondary material section (19) of the material layer (18) applied or to be applied by means of a material removal device (22) of the squeegee (14),
= applying at least one secondary material (20) into the at least one secondary material section (19) of the material layer (18) applied or to be applied by means of a material nozzle (23) of the squeegee (14), and
= curing the primary material (13) and the at least one secondary material (20) by means of an energy source, after which the at least one secondary material (20) has been applied into the secondary material section (19).

10. Method according to claim 9, **characterized in that** the squeegee (14) for applying the primary material (13) and/or the at least one secondary material (20) is moved over a component space (12).

11. A method according to claim 9 or 10, **characterized in that**, for selectively removing the primary material (13), a slider of the squeegee (14) is moved from a rest position, in which the slider does not extend into the material layer (18) to be applied, to a working position, in which the slider extends into the material layer (18) to be applied, in order to remove the primary material (13) by means of the slider during the movement of the doctor blade (14) over a component space (12) in at least one of the secondary material sections (19).

12. A method according to claim 11, **characterized in that** the slider is moved into the working position at the beginning of a secondary material section (19) and remains in the working position until the end of the secondary material section (19) has been reached, then the slider is moved from the working position into the rest position.

13. A method according to one of claims 9 to 12, **characterized in that** a manufacturing plant (10) according to one of claims 1 to 8 is provided, wherein the method of manufacturing the component according to one of claims 9 to 12 is carried out by means of the provided manufacturing plant (10).

## Revendications

1. Installation de fabrication (10) pour réaliser un composant par un procédé de fabrication additif, dans lequel un matériau sans forme est appliqué couche par couche et, sur la base d'un modèle de données numériques, est sélectivement durci, l'installation de fabrication (10) comprenant :
- un réservoir de matériau (11) dans lequel un matériau primaire (13) est mis à disposition,
- un compartiment à composant (12) dans lequel le matériau primaire (13) est appliqué couche par couche et sélectivement durci,
- au moins un racleur (14) qui est mobile au-dessus du compartiment à composant (12) et qui est réalisé pour l'application couche par couche du matériau primaire (13), mis à disposition par le réservoir de matériau (11), pendant le mouvement au-dessus du compartiment à composant (12), et
- une source d'énergie qui est réalisée pour le durcissement sélectif du matériau primaire (13) appliqué couche par couche dans le compartiment à composant (12),
- il est prévu un racleur (14) qui est mobile au-dessus du compartiment à composant (12) et qui est réalisé pour appliquer au moins un autre matériau secondaire (20) pendant le mouvement au-dessus du compartiment à composant (12),
**caractérisée en ce que**
le racleur (14) comprend un moyen d'enlèvement de matériau (22) qui est réalisé dans au moins une portion de matériau secondaire (19) donnée pour l'enlèvement sélectif d'un matériau primaire (13) déjà appliqué d'une couche de matériau (18) appliquée ou à appliquer, pendant le mouvement du racleur (14) au-dessus du compartiment à composant (12),
- le racleur (14) comprenant une buse à matériau (23) qui est réalisée pour, pendant le mouvement du racleur (14) au-dessus du compartiment à composant (12), appliquer le matériau secondaire (20), mis à disposition du racleur (14), dans ladite au moins une portion de matériau secondaire (19) de la couche de matériau appliquée ou à appliquer (18), et
- la source d'énergie étant réalisée pour faire durcir ledit au moins un matériau secondaire appliqué (20).

2. Installation de fabrication (10) selon la revendication 1,
**caractérisée en ce que**
le racleur (14) pour appliquer le matériau primaire (13) est le racleur (14) pour appliquer ledit au moins un matériau secondaire (20) et comprend le moyen d'enlèvement de matériau (22) et la buse à matériau (23).

3. Installation de fabrication (10) selon la revendication 2,
**caractérisée en ce que**
le racleur (14) est réalisé pour appliquer le matériau primaire (13) et pour enlever le matériau primaire (13) et pour appliquer ledit au moins un matériau secondaire (20) pendant un mouvement du racleur (14) au-dessus du compartiment à composant (12) pour appliquer une couche de matériau (18).

4. Installation de fabrication (10) selon l'une des revendications 1 à 3,
**caractérisée en ce que**
le moyen d'enlèvement de matériau (22) comprend un poussoir qui peut être déplacé depuis une position de repos dans laquelle le poussoir ne pénètre pas dans la couche de matériau à appliquer (18), jusque dans une position de travail dans laquelle le poussoir pénètre dans la couche de matériau à appliquer (18), et en retour, le poussoir étant réalisé pour pousser, en position de travail, le matériau primaire (13) déjà appliqué de la couche de matériau appliquée ou à appliquer (18) en direction de mouvement du racleur (14), pendant le mouvement du racleur (14) au-dessus du compartiment à composant (12), de sorte que le matériau primaire (13) est enlevé dans la portion de matériau secondaire (19) au moyen du poussoir.

5. Installation de fabrication (10) selon l'une des revendications 1 à 3,
**caractérisée en ce que**
le moyen d'enlèvement de matériau (22) comprend un dispositif d'aspiration qui peut être amené depuis un état de fonctionnement non-aspirant jusque dans un état de fonctionnement aspirant, et inversement, le dispositif d'aspiration étant réalisé pour aspirer, dans l'état de fonctionnement aspirant, le matériau primaire (13) déjà appliqué de la couche de matériau (18) appliquée ou à appliquer, de sorte que le matériau primaire (13) est enlevé dans la portion de matériau secondaire (19) à l'aide du dispositif d'aspiration.

6. Installation de fabrication (10) selon l'une des revendications précédentes,
**caractérisée en ce que**
le racleur (14) pour appliquer ledit au moins un matériau secondaire (20) comprend au moins un récipient à matériau secondaire (21) qui est réalisé pour mettre à disposition ledit au moins un matériau secondaire (20) et qui est en communication avec la buse à matériau (23) pour appliquer le matériau secondaire (20) mis à disposition.

7. Installation de fabrication (10) selon l'une des revendications précédentes,
**caractérisée en ce que**
la buse à matériau (23) est disposée en aval du moyen d'enlèvement de matériau (22), en direction de mouvement du racleur (14).

8. Installation de fabrication (10) selon l'une des revendications précédentes,
**caractérisée en ce que**
l'installation de fabrication (10) comprend à titre de source d'énergie un laser (16) et/ou une source d'électrons pour générer un faisceau d'électrons qui est réalisé pour le durcissement sélectif du matériau primaire et dudit au moins un matériau secondaire, ou **en ce que**
l'installation de fabrication (10) comprend à titre de source d'énergie plus d'un laser (16) et/ou plus d'une source d'électrons pour générer un faisceau d'électrons, un premier laser (16) ou une première source d'électrons étant réalisé(e) pour le durcissement sélectif du matériau primaire introduit (13) et au moins un second laser (16) ou une seconde source d'électrons étant réalisé(e) pour le durcissement dudit au moins un matériau secondaire (20).

9. Procédé pour réaliser un composant par un procédé de fabrication additif, dans lequel un matériau sans forme est appliqué couche par couche et, sur la base d'un modèle de données numériques, est sélectivement durci, comprenant les étapes consistant à :
- appliquer couche par couche un matériau primaire (13) à l'aide d'un racleur (14) d'une installation de fabrication (10),
- enlever sélectivement le matériau primaire (13) d'une couche de matériau appliquée ou à appliquer (18) dans au moins une portion de matériau secondaire donnée (19) de la couche de matériau appliquée ou à appliquer (18) à l'aide d'un moyen d'enlèvement de matériau (22) du racleur (14),
- appliquer au moins un matériau secondaire (20) dans ladite au moins une portion de matériau secondaire (19) de la couche de matériau appliquée ou à appliquer (18) à l'aide d'une buse à matériau (23) du racleur (14), et
- faire durcir le matériau primaire (13) et ledit au moins un matériau secondaire (20) à l'aide d'une source d'énergie, une fois que ledit au moins un matériau secondaire (20) a été appliqué dans la portion de matériau secondaire (19).

10. Procédé selon la revendication 9,
**caractérisé en ce que**
le racleur (14) pour appliquer le matériau primaire (13) et/ou ledit au moins un matériau secondaire (20) est déplacé au-dessus d'un compartiment à composant (12).

11. Procédé selon la revendication 9 ou 10,
**caractérisé en ce que**
pour enlever sélectivement le matériau primaire (13), un poussoir du racleur (14) est déplacé depuis une position de repos dans laquelle le poussoir ne pénètre pas dans la couche de matériau à appliquer (18), jusque dans une position de travail dans laquelle le poussoir pénètre dans la couche de matériau à appliquer (18), afin d'enlever le matériau primaire (13) à l'aide du poussoir dans l'une au moins des portions de matériau secondaire (19), pendant le mouvement du racleur (14) au-dessus d'un compartiment à composant (12).

12. Procédé selon la revendication 11,
**caractérisé en ce que**
au début d'une portion de matériau secondaire (19), le poussoir est amené dans la position de travail et demeure dans celle-ci jusqu'à ce que la fin de la portion de matériau secondaire (19) soit atteinte, le poussoir étant alors amené depuis la position de travail jusque dans la position de repos.

13. Procédé selon l'une des revendications 9 à 12,
**caractérisé en ce que**
on met à disposition une installation de fabrication (10) selon l'une des revendications 1 à 8, le procédé pour réaliser le composant selon l'une des revendications 9 à 12 étant mis en œuvre à l'aide de l'installation de fabrication (10) mise à disposition.
